(19) Europäisches Patentamt
European Patent Office
Office européen des brevets

(11) Publication number: **0 019 852**
**B1**

# (12) EUROPEAN PATENT SPECIFICATION

(45) Date of publication of patent specification: **20.07.83**

(51) Int. Cl.³: **C 08 G 59/68, C 07 F 9/54**

(21) Application number: **80102837.4**

(22) Date of filing: **21.05.80**

(54) **Phosphonium phenoxide catalysts, epoxy resin containing same and process for promoting reaction of epoxides with phenols and/or carboxylic acids.**

(30) Priority: **23.05.79 US 41567**

(43) Date of publication of application:
**10.12.80 Bulletin 80/25**

(45) Publication of the grant of the patent:
**20.07.83 Bulletin 83/29**

(84) Designated Contracting States:
**DE GB NL**

(56) References cited:
**EP - A - 0 000 578**
**US - A - 3 477 990**
**US - A - 3 948 855**
**US - A - 4 177 216**

(73) Proprietor: **THE DOW CHEMICAL COMPANY**
**Dow Center 2030 Abbott Road Post Office Box 1967**
**Midland Michigan 48640 (US)**

(72) Inventor: **Doorakian, George Anthony**
**4 Bandera Drive**
**Bedford, Massachusetts (US)**
Inventor: **Bertram, James Lambert**
**115 Southern Oaks Drive**
**Lake Jackson, Texas (US)**

(74) Representative: **Hann, Michael, Dr.**
**Marburger Strasse 38**
**D-6300 Giessen (DE)**

**EP 0 019 852 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

# Phosphonium phenoxide catalysts, epoxy resin containing same and process for promoting reaction of epoxides with phenols and/or carboxylic acids

It is well-known in the art to produce hydroxyl-containing ethers by reacting a vicinal epoxide with a compound bearing phenolic hydroxyls in the presence of such catalysts as tertiary amines, quaternary ammonium halides, and phosphonium halides. See, for example: U.S. Patent Nos. 2,216,099; 2,633,458; 2,658,855; 3,377,406; 3,477,990; 3,547,881; 3,547,885; 3,694,407; 3,738,862; 3,948,855; and 4,048,141. Canadian Patent No. 893,191, German Patent Nos. 2,206,218 and 2,335,199 and the text, *Handbook of Epoxy Resins* by H. Lee and K. Neville, McGraw-Hill (1967), *Epoxy Resins-Chemistry and Technology,* Edited by C. Maynard and Y. Tanaka, Marcel-Dekker, Inc. (1973) are also of interest. It is also taught in U.S. Patent 4,048,141 that certain phosphonium catalysts promote the reaction between vicinal epoxides and phenols, carboxylic acids or carboxylic anhydrides.

The prior art catalysts for promoting reactions of epoxides with phenols, carboxylic acids or carboxylic anhydrides have generally been deficient in one or more aspects. In many instances, the catalysts react with the epoxy reactant and thus preclude the marketing of a blend comprising an epoxy resin and a catalyst, a so-called precatalyzed epoxy resin. Blends comprising a polyhydric phenol and a catalyst, a so-called precatalyzed polyhydric phenol, have likewise been avoided due to possible adverse reactions of the two components. Many prior art catalysts exhibit a lack of selectivity in that they simultaneously promote the reaction of an epoxy resin with both the phenolic hydroxyl group(s) on the reactant and the aliphatic hydroxyl group(s) on the product, which produces branched or crosslinked polymers rather than the desired linear polymers. In still other instances, the reaction rate is unsatisfactory and/or the product is highly colored or contaminated with corrosive anions (e.g. chloride). Moreover, vinyl ester resins made from the catalyzed reaction products of epoxy resins and polyhydric phenols in the presence of most prior art catalysts require undesirably long cure times because of the presence of relatively high concentrations of phenolic hydroxyl groups.

The prior art catalysts, to a greater or lesser degree, produce at best linear or substantially linear polymers of relatively limited molecular weights. For example, the advancement reaction of 4,4'-isopropylidenediphenol (bisphenol A) with a diglycidyl ether of bisphenol A in the presence of a triphenyl ethyl phosphonium acetate salt-acetic acid complex produces a linear polymer with a maximum weight average molecular weight of about 60,000 as determined by gel permeation chromatography. These deficiencies have now been remedied by the present invention.

This invention is directed to a compound represented by the formula:

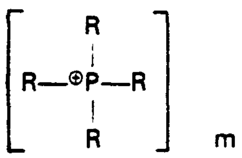

$X^{-m}$ I

wherein each R independently is a hydrocarbyl or inertly substituted hydrocarbyl radical, X is an anion and m is the valence of the anion X characterized in that X is a phenoxide anion, the anion being a conjugate base of a polyhydric phenol bearing from 2 to 6 nuclear hydroxyl groups and having from 6 to 30 carbon atoms. This family of compounds is useful as catalysts for promoting the reaction between vicinal epoxides and phenols, carboxylic acids or carboxylic anhydrides. These compounds may be alternatively described as tetrahydrocarbyl phosphonium phenoxide salts. Compounds of this invention include those salts complexed with one or more moles of a polyhydric phenol $H_mX$ per mole of phosphonium phenoxide salt, wherein X and m are defined as above. Compounds of this invention also include those salts complexed with one or more moles of a tetrahydrocarbyl phosphonium hydroxide salt having the formula:

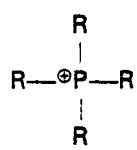

$OH^{\ominus}$ II

per mole of phosphonium phenoxide salt wherein R is defined as above.

These novel catalysts are surprisingly effective in selectively catalyzing the desired reaction at a suitable reaction rate. Reaction products can be obtained in high conversion and are of excellent color. When the novel compound represented by Formula I, in which X is derived from a polyhydric phenol is used as an advancement catalyst, linear reaction products can be prepared with weight average molecular weights substantially exceeding those effected by prior art methods.

Additionally, the novel catalysts are surprisingly unreactive with epoxy resins or polyhydric phenols at conventional storage temperatures. As a result, a precatalyzed epoxy resin or polyhydric phenol can be prepared, respectively, by blending the subject catalyst with an epoxy resin or polyhydric phenol.

The phenoxide anion is distinguished from the corresponding polyhydric phenol in that one or more of the aromatic hydroxyl groups are deprotonated in the former. Representative phenoxide anions include conjugate bases of polyhydric phenols, such as resorcinol, hydroquinone, phenolphthalein, 2,4',4"-tri(hydroxyphenyl)methane (i.e., trisphenol) and the compound corresponding to the formula

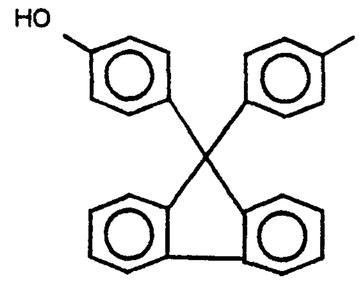

III

In one embodiment, the phenoxide anion, X, can be the conjugate base of an advanced epoxy resin bearing at least one terminal phenolic hydroxyl group. Where the phosphonium phenoxide salt is utilized as a catalyst for the advancement of a polyepoxide, the anion, X, is desirably a conjugate base of the polyhydric phenol to be reacted with the polyepoxide reactant.

Particularly preferred are the conjugate bases of polyhydric phenols corresponding to the formula

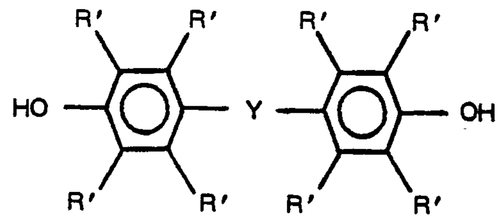

IV

wherein each R' independently is a hydrogen, halogen, hydrocarbyl, inertly-substituted hydrocarbyl or hydrocarbyloxy group, and Y is a single covalent bond, —O—, —S—,

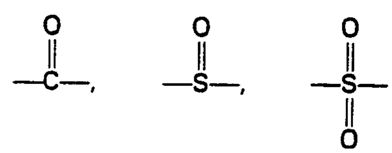

lower alkylene or alkylidene of from 1 to 6 carbon atoms, inclusive. More preferably, each R' independently is hydrogen, chlorine or bromine and Y is a $C_1$—$C_4$ alkylene or alkylidene; most preferably, Y is methylene or isopropylidene. The most preferred phenoxide anions are those derived from bisphenol A (4,4'-isopropylidenediphenol), bisphenol F (4,4'-methylenediphenol), 2,2',6,6'-tetrachlorobisphenol A, 2,2',6,6'-tetrabromobisphenol A, bisphenol S (4,4'-sulfonyldiphenol) and 2,2',6,6'-tetrabromo-4,4'-sulfonyldiphenol.

In both the salts and the complexes, each R independently is preferably phenyl, benzyl, alkyl or inertly-substituted alkyl of from 1 to 12 carbon atoms and more preferably is phenyl or a $C_1$—$C_4$ alkyl. Illustrative examples of the instant class of novel compounds include: tetraphenyl-, triphenyl methyl-, triphenyl ethyl-, triphenyl n-butyl-, triphenyl benzyl-, tetra-n-butyl-, tri-n-butyl methyl-, tri-n-butyl benzyl-, tri(cyanoethyl)methyl- and tri-(hydroxymethyl)methylphosphonium phenoxide salts. More preferably each R is independently phenyl or n-butyl groups. Most preferably the tetrahydrocarbyl groups are triphenyl n-butyl or triphenyl ethyl groups.

Compounds of formula I are conveniently prepared by reacting, at a temperature of 0°C to 25°C, a tetrahydrocarbyl phosphonium halide dissolved in a lower alkanol, water or mixtures thereof with an ion-exchange resin of the quaternary ammonium, hydroxide-type, to thereby produce a solution containing the corresponding tetrahydrocarbyl phosphonium hydroxide salt. The reaction is most efficiently carried out by passing the phosphonium halide solution through a column packed with the ion-exchange resin; however, a batchwise procedure can also be used. In an alternate procedure, the tetrahydrocarbyl phosphonium halide is reacted with an alkali metal hydroxide in a liquid medium to produce the tetrahydrocarbyl phosphonium hydroxide. A polyhydric phenol is then added to the tetrahydrocarbyl phosphonium hydroxide solution, in generally a ratio so as to produce either a tetrahydrocarbyl phosphonium phenoxide salt or a polyhydric phenol complex of said salt. Completion of this reaction can be determined by monitoring the pH of the solution. The phosphonium salt can be separated by filtration, if a precipitate, or the solvent can be removed by distillation to recover the solid salt.

In still another process, the tetrahydrocarbyl phosphonium halide can be mixed with a polyhydric phenol in a liquid medium followed by addition of an alkali metal hydroxide to produce a tetrahydrocarbyl phosphonium phenoxide salt or a polyhydric phenol complex of said salt. This latter method is the method of choice for preparing the preferred tetrahydrocarbyl phosphonium catalysts having phenoxide anions, such as those derived from bisphenol A.

When 0.5 mole of a polyhydric phenol is reacted with each mole of the tetrahydrocarbyl phosphonium hydroxide, a tetrahydrocarbyl phosphonium phenoxide salt complexed with tetrahydrocarbyl phosphonium hydroxide is produced. Of course, when a smaller excess of the phosphonium hydroxide is employed, all of the salt will not be complexed. In particular, such complexes have been observed where the polyhydric phenol reactant is bisphenol A or bisphenol S. Generally, the uncomplexed salt can be recovered by treating the solid phosphonium hydroxide complex with acetone. These phosphonium hydroxide complexes are in some instances somewhat less stable than the corresponding uncomplexed tetrahydrocarbyl phosphonium phenoxide salt. For example, a triphenylethyl phosphonium salt of bisphenol A complexed with the corresponding phosphonium hydroxide had a half-life of three days at 60°C in a 50 weight percent methanol solution. On the other hand, the corresponding phosphonium salt of bisphenol S complexed with triphenylethyl phosphonium hydroxide did not decompose to phosphine oxide to any significant degree during a 25-day period at 60°C in a methanol solution. The aforementioned tetrahydrocarbyl phosphonium hydroxide complexes are advantageous as advancement catalysts, because they are generally more soluble in organic solvents, such as methanol, than are the tetrahydrocarbyl phosphonium phenoxide salts. Hence, these complexes are more readily dispersed in an advancement reaction medium containing an organic solvent.

If the polyhydric phenol reactant has a pKa of the first hydroxyl group deprotonated greater than about 7.5, such as bisphenol A (pKa 10.0), then a polyhydric phenol complex of the phosphonium salt is preferentially isolated from the reaction of the polyhydric phenol with no more than an equimolar amount of the phosphonium hydroxide. This polyhydric phenol complex is termed a 1:2 salt because one mole of the phosphonium cation is present with two moles of the phenol (whether as a phenoxide anion or phenol adduct). On the other hand, if the polyhydric phenol reactant has a pKa less than about 7.5, such as 2,2',6,6'-tetrabromo-4,4'-isopropylidenediphenol (pKa 6.8), the tetrahydrocarbyl phosphonium phenoxide salt will be the predominant product isolated. These products are 1:1 phosphonium salts. A large number of acid dissociation constant values are listed in the chapter by H. C. Brown et al. in "Determination of Organic Structures by Physical Methods", Academic Press (1955), edited by E. A. Braude and F. C. Nachod, which is herein incorporated by reference. The analytical data available does not resolve whether the tetrahydrocarbyl phosphonium phenoxide salt or the di(tetrahydrocarbyl phosphonium)-bisphenoxide salt or a phenol complex predominates or is the sole species present at equilibrium in a solution.

The phosphonium phenoxide salts, the polyhydric phenol complexes and the tetrahydrocarbyl phosphonium hydroxide complexes are generally white to light-yellow, crystalline solids having distinct melting points and low vapor pressure. These solids are generally soluble or slightly soluble in moderately polar solvents, such as, for example, acetone, methanol, ethanol, phenol, isopropanol and liquid epoxy resins. These compounds are also generally insoluble in benzene, toluene and water.

The vicinal epoxide reactants are organic compounds bearing one or more epoxide or oxirane groups corresponding to the formula

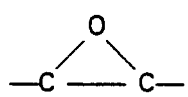

V.

The alkylene oxides having from 2 to 24 carbon atoms, the epihalohydrins and the epoxy resins are perhaps the best known and most widely used members of the genus. Ethylene oxide, 1,2-propylene oxide, 1,2-butylene oxide and epichlorohydrin are the preferred monoepoxides. These alkylene oxides can be reacted with monohydric phenols to prepare useful alkylene glycol phenyl ethers, e.g., $(C_6H_5)—OCH_2CH_2—OH$, in the presence of the above-described catalysts. Similarly, monoepoxides can be reacted with carboxylic acids and anhydrides to prepare other useful products.

The most useful epoxy reactants are the polyepoxides, particularly epoxy resins. These polyepoxides are reacted with polyhydric phenols to form a phenolic hydroxy ether in the so-called advancement reaction. The polyepoxide reactants are organic compounds possessing more than one 1,2-epoxide group per molecule. These polyepoxides can be saturated or unsaturated aliphatic or cycloaliphatic, aromatic or heterocyclic in nature. Additionally, the polyepoxides can bear substituents which are inert in the advancement reaction, such as ether or halogen moieties.

The polyepoxides are conveniently described in terms of epoxy equivalent values, as defined in U.S. Patent 2,633,458. The polyepoxides used in the subject advancement reaction are those having an epoxy equivalency greater than 1.0.

Various examples of polyepoxides that may be used in the invention are given in U.S. Patent 2,633,458.

Other examples of polyepoxides include the glycidyl ethers of novolac resins, i.e., phenol-aldehyde condensates. Preferred resins of this type are those of the formula:

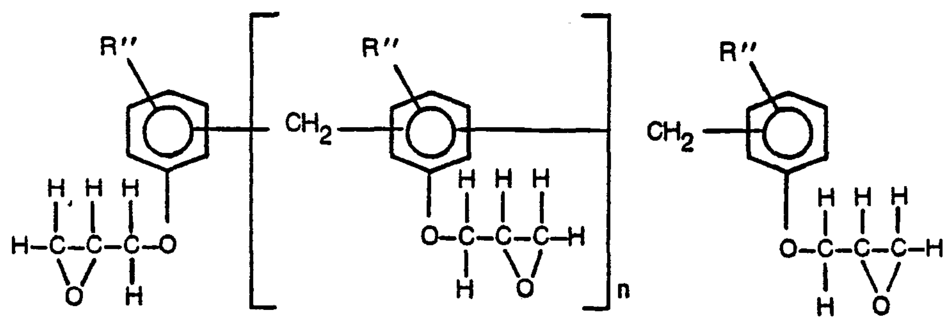

VI

wherein each R" independently is hydrogen or an alkyl radical and n has an average value of from 0.1 to 10, preferably from 1 to 2. Preparation of these polyepoxides is illustrated in U.S. Patent Nos. 2,616,099 and 2,658,885.

The preferred polyepoxides are those represented by the general formula

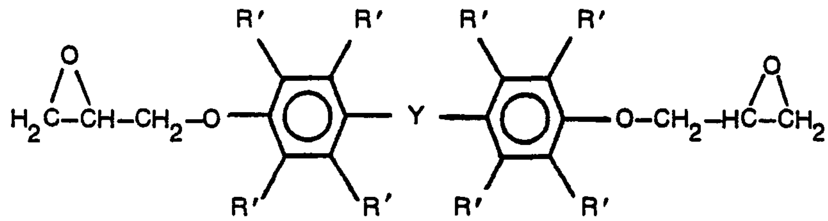

VII

wherein R' and Y are as described earlier and Y preferably is an alkylene or alkylidine group having from 1 to 4 carbon atoms.

Other examples of polyepoxides include the epoxidized esters of the polyethylenically unsaturated monocarboxylic acids, such as epoxidized linseed, soybean, perilla, oiticica, tung, walnut and dehydrated castor oil, methyl linoleate, butyl linoleate, ethyl 9,12-octadecanedioate, butyl 9,12,15-octadecanetrioate, butyl oleostearate, mono- or diglycerides of tung oil, monoglycerides of soybean oil, sunflower oil, rapeseed oil, hempseed oil, sardine oil and cottonseed oil.

Another group of the epoxy-containing materials used in the process of the invention include the epoxidized esters prepared from unsaturated monohydric alcohols and polycarboxylic acids, such as, for example, diglycidyl phthalate, diglycidyl adipate, diglycidyl isophthalate, di(2,3-epoxybutyl)adipate, di(2,3-epoxybutyl)oxalate, di(2,3-epoxyhexyl)succinate, di(3,4-epoxybutyl)maleate, di(2,3-epoxyoctyl)-pimelate, di(2,3-epoxybutyl)phthalate, di(2,3-epoxyoctyl)tetrahydrophthalate, di(4,5-epoxydodecyl)-maleate, di(2,3-epoxybutyl)terephthalate, di(2,3-epoxypentyl)thiodipropionate, di(5,6-epoxytetra-decyl)diphenyldicarboxylate, di(3,4-epoxyheptyl)sulfonyldibutyrate, tri(2,3-epoxybutyl)1,2,4-butane-tricarboxylate, di(5,6-epoxypentadecyl)tartrate, di(4,5-epoxytetradecyl)maleate, di(2,3-epoxybutyl)-azelate, di(3,4-epoxybutyl)citrate, di(5,6-epoxyoctyl)cyclohexane-1,3-dicarboxylate and di(4,5-epoxy-octadecyl)malonate.

Another group of the epoxy-containing materials include those epoxidized esters prepared from unsaturated alcohols and unsaturated carboxylic acids, such as, for example, glycidyl glycidate, 2,3-epoxybutyl 3,4-epoxypentanoate; 3,4-epoxyhexyl 3,4-epoxypentanoate; and 3,4-epoxy-6-methylcyclohexylmethyl 3,4-epoxy-6-methylcyclohexane carboxylate.

Still another group of the epoxy-containing materials includes epoxidized derivatives of polyethylenically unsaturated polycarboxylic acids, such as, for example, dimethyl 8,9,12,13-diepoxy-eicosanedioate; dibutyl 7,8,11,12-diepoxyoctadecanedioate; dioctyl 10,11-diethyl-8,9,12,13-diepoxy-eicosanedioate; dihexyl 6,7,10,11-diepoxyhexadecanedioate; didecyl 9-epoxyethyl-10,11-epoxyocta-decanedioate; dibutyl 3-butyl-3,4,5,6-diepoxycyclohexane-1,2-dicarboxylate; dicyclohexyl 3,4,5,6-diepoxycyclohexane-1,2-dicarboxylate; dibenzyl 1,2,4,5-diepoxycyclohexane-1,2-dicarboxylate and diethyl 5,6,10,11-diepoxyoctadecyl succinate.

Still another group comprises the epoxidized polyethylenically unsaturated hydrocarbons, such as epoxidized 2,2-bis(2-cyclohexenyl)propane, epoxidized vinyl cyclohexane and epoxidized dimer of cyclopentadiene.

The phenolic reactants are organic compounds having one or more hydroxyl groups attached to an aromatic carbocyclic nucleus. This class of compounds therefore includes, for example, phenol, alpha and betanaphthol, o-, m-, or p-chlorophenol, alkylated derivatives of phenol (e.g. o-methyl-, 3,5-dimethyl-, p-t-butyl- and p-nonylphenol) and other monohydric phenols as well as polyhydric phenols, such as, for example, resorcinol and hydroquinone.

The polyhydric phenols bearing from 2 to 6 hydroxyl groups and having from 6 to about 30 carbon atoms are particularly useful as reactants in the reaction with epoxy resins to form high molecular weight resins. Representative of these preferred phenols are, for example, 2,4',4"-tri-(hydroxyphenyl)methane or phenolphthalein. The most preferred phenols are bisphenol A, bisphenol F, 2,2',6,6'-tetrachlorobisphenol A, 2,2'-6,6'-tetrabromobisphenol A, and bisphenol S.

The organic carboxylic acids and anhydrides are likewise well known. The acids bear one or more carboxyl groups on the organic nucleus. The anhydrides are prepared from such carboxylic acids by the removal of water therefrom in an intra- or intermolecular condensation. This class of compounds therefore includes, for example, acetic, propionic, octanoic, stearic, acrylic, methacrylic, oleic, benzoic, phthalic, isophthalic, maleic, succinic, adipic, itaconic, polyacrylic and polymethacrylic acids, and anhydrides thereof, such as acetic anhydride, phthalic anhydride and hexahydrophthalic anhydride.

A preferred subclass of acids is comprised of members which are useful in crosslinking epoxy resins. The members of this subclass are normally di- or tribasic acids, or anhydrides thereof, and are preferably liquid or low melting solids such as, for example, succinic, maleic, or hexahydrophthalic acids or anhydrides. Other such acids and anhydrides are shown, for example, in U.S. Patent Nos. 2,970,983 and 3,547,885.

The reaction conditions employed in the process for reacting epoxides and phenols may be varied. Generally, however, convenient rates of reaction are obtained at reaction temperatures in the range of from 50°C to 300°C and reaction pressures ranging from about atmospheric to about 150 psig (1.16 MPa).

The ratio of the epoxide to the phenol or carboxylic acid or carboxylic anhydride reactants to be employed in the process may vary over a wide range depending upon the type of reactants and the type of product desired. For example, if a product terminated with a phenolic ether group is desired, one would employ an excess of the phenol in the process.

The amount of the phosphonium catalyst employed in the process of this invention can likewise vary over a wide range, so long as a catalytic amount is present. In general, the catalyst is added in amounts of from 0.001 weight percent to 10 weight percent, preferably from 0.05 weight percent to 5 weight percent, based upon the weight of the reactants.

The reaction may be conducted in the presence or absence of solvents or diluents, but is conveniently conducted in a liquid phase. In most cases, the reactants will be liquid or low melting solids and the reaction may be at least initially easily effected without the addition of solvents or diluents. As the advancement reaction proceeds and the average molecular weight of the product increases, the reaction mixture becomes progressively more viscous and may tend to solidify. To maintain efficient blending of the reaction mixture, it may be necessary to add diluents, increase the temperature of the reaction mixture to the fusion point of the reactants or to utilize very efficient blending means. Suitable diluents are those organic compounds which are inert to the reactants and in the liquid phase at the reaction temperature such as, for example, ethylene glycol ethyl ether, methyl ethyl ketone, acetone, xylene, toluene and cyclohexane. The diluent is desirably substantially free of impurities which will decrease the activity of the catalyst, such as hydrogen peroxide or uncomplexed transition metal ions.

If solvents are employed in the reaction and the resulting product is to be used for coating purposes, the solvent may be retained in the reaction mixture. Otherwise, the solvent can be removed by any suitable method such as distillation.

One particularly advantageous embodiment of the instant process is the use of tetrahydrocarbyl phosphonium salts of polyhydric phenols as a catalyst in the advancement reaction to produce ultra-high molecular weight resins and polymers. To produce ultra-high molecular weight resins, relatively greater catalyst loadings must be employed than to produce resins of molecular weights less than 100,000 with these same catalysts. The advancement reaction can be advantageously conducted in a high boiling, inert, organic diluent, such as a derivative of ethylene glycol, for example, ethylene glycol ethyl ether. Desirably, substantially equivalent quantities of polyhydric phenol and polyepoxide reactants should be employed in the overall reaction (i.e., no more than about 2 percent excess of either reactant). As the reaction between the polyepoxide and the polyhydric phenol approaches completion, it is desirable, but not essential, to introduce sufficient tetrabromobisphenol A to react the vicinal epoxy groups completely and to increase molecular weight of the product in the manner taught in U.S. Patent 4,104,257.

The products obtained according to the above process of reacting a polyepoxide with a phenol in the presence of the defined phosphonium catalysts in a process are phenolic hydroxy ether compounds. Their physical characteristics will depend upon the reactants and proportions employed. In general, the products will vary from liquids to solids, and in the case of the high molecular weight resins will vary from viscous liquids to hard solids. The products will possess an aliphatic hydroxyl group formed by each reaction of an epoxide and a phenolic hydroxyl group, which can be further reacted through this group if desired. The polyfunctional reactants will also give products terminated in phenolic hydroxyl groups and/or epoxy groups, and these will be available for further reaction.

The control of the equivalent ratio of the polyepoxides and polyhydric phenols during the advancement reaction permits the preparation of a variety of products. Those products which use an

excess of the polyepoxide in their preparation will be terminated in epoxy groups and can be used as polyepoxides in known reactions of polyepoxides with curing agents. The high molecular weight polyepoxides are particularly useful in preparing surface coatings, adhesives, laminates, filament windings, coatings for highways and airfields and in structural applications and formation of foams. Those prepared from the halogenated polyhydric phenols as shown hereinafter are particularly useful as flame proofing resins for forming laminates and coatings. The ultra-high molecular weight product terminated with a phenolic ether group approaches an engineering thermoplastic, like polycarbonate, in some of its properties and is particularly suited to such uses as an automotive undercoating, films or molded articles. This novel polymer is linear or substantially linear, consists essentially of oxyaryleneoxy(1,3-(2-hydroxy)alkylene) units (wherein the arylene moiety is the aromatic portion of the polyhydric phenol reactant) and said polymer has a weight average molecular weight of at least about 100,000. The polymeric product can be used as produced by the in-situ process or the polymer can be precipitated from methanol to remove catalyst by-products and monomeric impurities.

Reaction products terminated in epoxy groups can also be used to prepare vinyl ester resins. Vinyl ester resins are described in U.S. Patent 3,367,992 wherein dicarboxylic acid half esters of hydroxyalkyl acrylates or methacrylates are reacted with polyepoxide resins. Bowen in U.S. Patent Nos. 3,066,112 and 3,179,623 describes the preparation of vinyl ester resins from unsaturated monocarboxylic acids such as acrylic and methacrylic acid. Vinyl ester resins based on epoxy novolac resins are described in U.S. Patent 3,301,743 to Fekete et al. Fekete et al. also decribe in U.S. Patent 3,256,226 vinyl ester resins wherein the molecular weight of the polyepoxide is increased by reacting a dicarboxylic acid with the polyepoxide resin as well as acrylic acid, etc. Other difunctional compounds containing a group which is reactive with an epoxide group, such as an amine or mercaptan, may be utilized in place of the dicarboxylic acid. All of the above-described resins, which contain the characteristic linkages

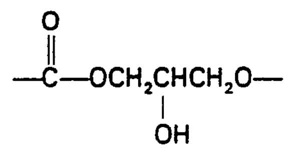

and terminal, polymerizable vinylidene groups, are classified as vinyl ester resins.

Unsaturated monocarboxylic acids which can be reacted with a polyepoxide in the presence of the described catalysts to prepare a vinyl ester resin include, for example, acrylic acid, methacrylic acid, halogenated acrylic acid or methacrylic acid, cinnamic acid and mixtures thereof, and hydroxyalkyl acrylate or methacrylate half esters of dicarboxyl acids as described in U.S. Patent 3,367,992 wherein the hydroxyalkyl group preferably has from 2 to 6 carbon atoms.

Precatalyzed epoxy resin compositions and precatalyzed polyhydric phenol compositions are of particular commercial interest. Precatalyzed epoxy resin compositions are blends of an epoxy resin and an effective amount of an advancement catalyst, which when combined with a polyhydric phenol at reactive conditions produce epoxy resins of increased molecular weight. Similarly, precatalyzed polyhydric phenols are blends of a polyhydric phenol and an effective amount of an advancement catalyst. In the case of a normally solid polyhydric phenol, such as bisphenol A, it is advisable to first melt the phenol and then to add the catalyst to the liquid phenol to obtain a homogeneous mixture. The catalysts previously described are particularly suited for this use.

The following examples are illustrative of the present invention and are not to be construed as limiting the scope thereof in any manner. All parts and percentages are by weight unless otherwise specified.

Example 1

A solution of 100 grams of n-butyl triphenylphosphonium bromide in 40 grams of methanol was percolated through a tightly packed column of 509 grams of a quaternary ammonium-type, styrenedivinylbenzene anion exchange resin (sold under the tradename Dowex SBR) bearing 3.5 milliequivalents per gram of exchangeable hydroxide groups. The methanol solution was found by conventional methods of analysis to contain 20.7 percent of n-butyl triphenyl phosphonium hydroxide salt and less than 0.05 percent bromine.

A solution of 78.8 grams (0.145 mole) of 2,2',6,6'-tetrabromobisphenol A in 50 grams of methanol was added with stirring at 20°C to 48.8 grams (0.145 mole) of the n-butyl triphenyl phosphonium hydroxide salt in 236.0 grams of methanol solvent. After stirring the reaction mixture for thirty minutes, the mixture was filtered to collect a white precipitate. The collected precipitate was dried to yield 122.5 grams of a crude product having a melting point from 218°C to 220°C. The product was then washed with acetone. Conventional methods of analysis (infrared spectroscopy, elemental analysis and proton, carbon-13 and phosphorus nuclear magnetic resonance) were utilized to identify the product as a 1:1 n-butyl triphenyl phosphonium salt of 2,2',6,6'-tetrabromobisphenol A. The yield of the identified product based on the corresponding phosphonium hydroxide salt was 98.0 mole percent.

Example 2

In a manner otherwise similar to that described in Example 1, a methanol solution of 66.2 grams (0.29 mole) of bisphenol A was added to a stirred methanol solution containing 48.8 grams (0.145 mole) of the n-butyl triphenyl phosphonium hydroxide salt. A white crystalline precipitate was collected and dried to a constant weight of 103.97 grams. The melting point of the crude product was from 153°C to 155°C. Conventional methods of analysis were utilized to identify the product as a 1:2 n-butyl triphenyl phosphonium salt complex of bisphenol A. The yield of the identified product based on the corresponding phosphonium hydroxide salt was 92.4 mole percent.

When equimolar amounts of the n-butyl triphenyl phosphonium hydroxide salt and bisphenol A were employed in the methanol reaction medium a 1:2 n-butyl triphenyl phosphonium salt of bisphenol A was still isolated.

Example 3

In a manner otherwise similar to that described in Example 1, a methanol solution of 53.09 grams (0.145 mole) of tetrachlorobisphenol A was added to 48.8 grams (0.145 mole) of the n-butyl triphenyl phosphonium hydroxide salt. A white crystalline precipitate, having a dry weight of 97.75 grams, was collected. Conventional methods of analysis were utilized to identify the product as a 1:1 n-butyl triphenyl phosphonium salt of 2,2',6,6'-tetrachlorobisphenol A. The yield of the identified product was 98.5 mole percent.

Example 4

In a manner otherwise similar to that described in Example 1, a methanol solution of 3.03 grams (0.024 mole) of 1,3,5-trihydroxybenzene was added to a stirred methanol solution of 4.06 grams (0.012 mole) of the n-butyl triphenyl phosphonium hydroxide salt. The methanol solvent was distilled from the reaction mixture and the remaining 6.7 grams of tan solid washed with acetone. Conventional methods of analysis were utilized to identify the product as a 1:2 n-butyl triphenyl phosphonium salt complex of 1,3,5-trihydroxybenzene. The yield of the identified product was 98.0 mole percent.

Example 5

A solution of 140 grams of tetra(n-butyl)phosphonium bromide in 56 grams of methanol were percolated through a tightly packed column of 509 grams of a quaternary ammonium-type, styrenedivinylbenzene anion exchange resin (sold under the tradename DOWEX SBR) bearing 3.5 milliequivalents per gram of exchangeable hydroxide groups. The column was flushed with additional quantities of methanol, which are combined with the first methanol solution. The resulting methanol solution was determined to contain 17.0 percent of tetrabutyl phosphonium hydroxide salt.

In a manner otherwise similar to Example 1, a methanol solution of 44.47 grams (0.195 mole) of bisphenol A was added to a stirred methanol solution containing 27 grams (0.0975 mole) of tetrabutyl phosphonium hydroxide salt. A white crystalline precipitate was collected and dried to a constant weight of 68.1 grams. The melting point of the crude product was from 218°C to 221°C. Conventional methods of analysis were utilized to identify the product as a 1:2 tetra(n-butyl)phosphonium salt of bisphenol A. The yield of the identified product was 95.3 mole percent.

Examples 6—8

In a manner otherwise similar to that described in Example 6, the phenols listed in Table I were reacted with tetra(n-butyl)phosphonium hydroxide salt. The crude product was then isolated from the methanol reaction mixture, dried and weighed. Conventional methods of analysis were utilized to identify the product and in each instance the product was a tetra(n-butyl)phosphonium salt of the phenol reacted as expected. The mole ratio of the tetra(n-butyl)phosphonium hydroxide salt ($R_4P^{\oplus\ominus}OH$) to the phenol (HX) added to the reaction mixture, the mole ratio of the tetra(n-butyl)phosphonium cation to the total phenoxide and phenol in the product salt, the isolated yield of the product in mole percent and the pKa of the phenol reactant are also tabulated in Table I.

TABLE I

| Example | Phenol | Reaction Mole Ratio $R_4P^{\oplus\ominus}OH:HX$ | Salt Mole Ratio $R_4P^{\oplus}:(HX+X^{\ominus})$ | Isolated Yield | pKa |
|---|---|---|---|---|---|
| 6 | 2,2′,6,6′-Tetrabromo bisphenol A | 1:1 | 1:1 | 81.5 | 6.8 |
| 7 | 4,4′-Thiophenol | 1:2 | 1:2 | 98.0 | 10.3 |
| 8 | 4,4′-sulfonyldiphenol | 1:2 | 1:2 | 97.5 | 7.8 |

Examples 9—18

In a manner otherwise similar to that described in Example 1, several tetrahydrocarbyl phosphonium chloride ($R_4P^{\oplus}Cl^{\ominus}$) salts listed in Table II were percolated through an ion-exchange column to product the corresponding hydroxide salts. These tetrahydrocarbyl phosphonium hydroxide salts were then reacted with the phenol reactants (HX) tabulated in Table II in the appropriate mole ratios to produce the corresponding tetrahydrocarbyl phosphonium salt of the phenol reacted, as was confirmed by conventional methods of analysis. Other parameters and results of interest are also tabulated in Table II.

TABLE II

| Example | $R_4P^{\oplus}Cl^{\ominus}$ | Phenol | Salt Mole Ratio $R_4P^{\oplus}:(HX+X^{\ominus})$ | Isolated Yield |
|---|---|---|---|---|
| 9 | Benzyltriphenyl $P^{\oplus}Cl^{\ominus}$ | Bisphenol A | 1:2 | 95.0 |
| 10 | Benzyltriphenyl $P^{\oplus}Cl^{\ominus}$ | 2,2′,6,6′-tetrabromo-bisphenol A | 1:1 | 97.0 |
| 11 | Methyltriphenyl $P^{\oplus}Cl^{\ominus}$ | 2,2′,6,6′-tetrabromo-bisphenol A | 1:1 | 96.5 |
| 12 | Methyl(tri-n-butyl) $P^{\oplus}Cl^{\ominus}$ | 2,2′,6,6′-tetrabromo-bisphenol A | 1:1 | * |
| 13 | Methyl(tri-n-butyl) $P^{\oplus}Cl^{\ominus}$ | Bisphenol A | 1:2 | * |
| 14 | Benzyl(tri-n-butyl) $P^{\oplus}Cl^{\ominus}$ | Bisphenol A | 1:2 | * |
| 15 | Benzyl(tri-n-butyl) $P^{\oplus}Cl^{\ominus}$ | 2,2′,6,6′-tetrabromo-bisphenol A | 1:1 | * |
| 16 | Tetraphenyl $P^{\oplus}Cl^{\ominus}$ | 2,2′,6,6′-tetrabromo-bisphenol A | 1:1 | * |
| 17 | Tetraphenyl $P^{\oplus}Cl^{\ominus}$ | Bisphenol A | 1:2 | * |
| 18 | Ethyltriphenyl $P^{\oplus}Cl^{\ominus}$ | 2,2′,6,6′-tetrabromo-bisphenol A | 1:1 | * |

* Not determined.

Examples 19—22

A stirred methanol solution containing 45 grams (0.113 mole) of n-butyl triphenyl phosphonium bromide salt was contacted for 10 minutes sequentially with five 31-gram portions of a quaternary ammonium-type, styrenedivinylbenzene anion-exchange resin bearing 3.5 milliequivalents of exchangeable hydroxide groups per gram. After each contact, the methanol solution was separated from the resin and combined with methanol washes of the partially exchanged resin. This procedure produced an 8 percent solution of n-butyl triphenyl phosphonium hydroxide salt.

In a manner otherwise similar to that described in Example 1, the phenols listed in Table III were reacted with the n-butyl triphenyl phosphonium hydroxide salt prepared as described immediately above. The crude product was then isolated from the methanol reaction mixture, dried and weighed Conventional methods of analysis were utilized to identify the product and in each instance the product was an n-butyl triphenyl phosphonium salt of the phenol reacted as expected. The mole ratio of the phosphonium hydroxide salt to the phenol added to the reaction mixture, the mole ratio of the phosphonium cation to the total phenoxide and phenol in the product salt and the isolated yield of the product in mole percent are tabulated in Table III.

TABLE III

| Example | Phenol | Reaction Mole Ratio $R_4P^{\oplus}OH:HX$ | Salt Mole Ratio $R_4P^{\oplus}:(HX+X^{\ominus})$ | Isolated Yield |
|---|---|---|---|---|
| 19 | 4,4'-Dihydroxy-diphenyl ether | 1:2.4 | 1:2 | 76 |
| 20 | Phenol-phthalein | 1:2 | 1:2 | 76 |
| 21 | Resorcinol | 1:2 | 1:2 | 90 |
| 22 | 2,2'-Dihydroxy-biphenyl | 1:2 | 1:2 | 76 |

Example 23

An aqueous solution of 50 percent sodium hydroxide (5.02 grams, 0.0627 mole) at 20°C was added to a stirred reaction mixture of 25 grams (0.0626 mole) n-butyltriphenyl phosphonium bromide in 37.5 milliliters (ml) of methanol cooled to a temperature of 5°C. The rate of sodium hydroxide addition was controlled so that the temperature of the reaction mixture did not exceed 15°C. After addition of the sodium hydroxide was complete, the temperature of the stirred reaction mixture was permitted to rise to 18°C over a period of 15 minutes. A solution of 28.54 grams (0.125 mole) of bisphenol A in 34.0 ml of methanol was rapidly added at 20°C to the stirred reaction mixture. The reaction mixture was stirred for an additional 10 minutes, followed by the addition of 12.5 grams of deionized water to the mixture, and stirring for 60 more minutes. A white crystalline precipitate was recovered by filtration of the reaction mixture. This crude product was washed with deionized water and dried to a weight of 46.0 grams. Conventional methods of analysis were utilized to identify the product as a 1:2 n-butyl triphenyl phosphonium salt complex of bisphenol A. The yield of the product based on the corresponding phosphonium hydroxide salt was 92.7 mole percent.

Example 24

A solution of 28.54 grams (0.125 mole) of bisphenol A in 34.0 ml of methanol at 20°C was added to a stirred reaction mixture of 25 grams of n-butyl triphenyl phosphonium bromide in 27.5 ml of methanol. An aqueous solution of 50 percent sodium hydroxide (5.02 grams, 0.0627 mole) at 20°C was then added to the reaction mixture with cooling and at a slow rate so that the temperature of the mixture did not exceed 25°C. The reaction mixture was stirred for an additional 10 minutes, followed by the addition of 12.5 grams of deionized water to the mixture and stirring for 60 more minutes. A white crystalline precipitate was recovered by filtration of the reaction mixture. This crude product was washed with deionized water and dried to a weight of 48.4 grams. Conventional methods of analysis were utilized to identify the product as a 1:2 n-butyltriphenyl phosphonium salt complex of bisphenol A. The yield of the product based on the corresponding phosphonium hydroxide salt was 96 mole percent.

Example 25 and Comparative Run A

To a reaction vessel equipped with means for stirring and temperature indication was charged 141.37 grams of the diglycidyl ether of bisphenol A (DGEBA) having an epoxy equivalent weight of 183, 82.08 grams of bisphenol A and 74.5 grams of ethylene glycol ethyl ether. The DGEBA contained

0.375 percent total chlorine and 311 ppm of hydrolyzable chlorine. The reaction mixture was heated to about 50°C and then 2.59 grams (1.11 percent of reactants) of the 1:1 n-butyl triphenyl phosphonium salt of 2,2',6,6'-tetrabromobisphenol A described in Example 1 was introduced with stirring. The stirred reaction mixture was rapidly heated to 110°C and then more slowly heated over a period of 30 minutes to 130°C and maintained at the latter temperature for 165 minutes. A small sample of the reaction mixture was analyzed by conventional methods and it was determined that about 95.5 percent of the epoxy moieties and 98.7 percent of the phenolic hydroxyl groups had reacted.

Next 8.16 grams of 2,2',6,6'-tetrabromobisphenol A and 50.2 grams of ethylene glycol ethyl ether was added to the reaction mixture. It was desired to utilize as little of the ethylene glycol ethyl ether solvent as possible to maximize the weight-average molecular weight of the product resin; however, as the reaction mixture became too viscous to stir effectively, it was necessary to add additional amounts of the solvent. After 50 minutes at 130°C, it was necessary to add an additional 29.7 grams of ethylene glycol ethyl ether to the reaction mixture and after 65 additional minutes another 77.4 grams of solvent was added. The reaction mixture was stirred for 65 more minutes at 130°C, then 463 grams of ethylene glycol ethyl ether was added to the reaction mixture and the mixture was stirred to effect a homogeneous solution of the resin product. The weight-average molecular weight of the product resin in the solution as determined by gel permeation chromatography (GPC) was 123,825.

The homogeneous resin product solution at 25°C was removed and diluted with an equal weight of ethylene glycol ethyl ether. This dilute product soluition was added with vigorous stirring to 3,500 grams of methanol. The resulting resin product slurry was stirred for ten minutes and then the resin was collected by filtration. The resin was dried to a constant weight of 220 grams. The precipitated resin was determined by gel permeation chromatography to possess a weight-average molecular weight ($M_w$) of 120,192 and a number-average molecular weight of 14,855 ($M_n$).

About 37 grams of this ultra-high molecular weight (UHMW) resin was then molded into a 2.75" x 5" by 1/8" (70 x 127 x 3 mm) thick sheet in a heated press at a ram pressure of 15 tons (14 x $10^4$ kg). This sheet was then cut into strips suitable for testing the tensile strength, impact strength, flexural strength and hardness of the molded resin. Test strips of a high-molecular weight epoxy resin ($M_w$ = 39,800, $M_n$ = 7,000) sold commercially by Union Carbide Company under the tradename "PKHH" were prepared in a like manner for purposes of comparison. All tests were performed in accordance with standard methods approved by the American Society for Testing and Materials (ASTM) in Part 27. The molding temperature for each sheet and the relevant test data is set out in Table IV.

TABLE IV

| ASTM Test # | Property Tested | Materials Tested: PKHH* | Materials Tested: UHMW Resin |
|---|---|---|---|
| — | Molding Temperature | 177°C | 240°C |
| D—638—68 | Yield Tensile Strength, psi (MPa) | 8,684 (59.87) | 9,980 (68.81) |
| ,, | Yield Elongation (%) | 3.33 | 3.84 |
| D—790—66 Method I | Flexural Strength, psi (MPa) | 14,679 (101.21) | 15,866 (109.39) |
| ,, | Flexural Modulus of Elasticity, psi (MPa) | 419,900 (2895.11) | 396,900 (2736.53) |
| D—2583—67 | Barcol Hardness | 14 | 9 |
| D—256—56 Method A | Izod Impact Strength, foot-pounds/inch (J/mm) | 1.63 (.0870) | 1.21 (.0646) |

* Not an embodiment of this invention.

PKHH — tradename of a high molecular weight epoxy resin sold by Union Carbide Company.

Examples 26—31

In the manner described in Example 25, a reaction vessel was charged with DGEBA, bisphenol A and an ethylene glycol ethyl ether solvent. The reaction mixture was heated to 50°C and then a quantity of an n-butyltriphenyl or triphenylmethyl phosphonium phenoxide catalvst (from 0.65 to 1.70 percent of the reactants) as tabulated in Table V was introduced. The general procedure for preparing a 25 percent solution of an ultra high molecular weight resin product in an ethylene glycol ethyl ether described in Example 25 was then followed. The weight-average molecular weight of the product resin in the solution as determined by GPC was also determined and tabulated.

TABLE V

| Example | $P^{\oplus}$ Phenoxide Salt | Catalyst (Wt. %) | $M_w$ |
|---|---|---|---|
| 26 | 1:2 $(C_6H_5)_3P^{\oplus}(C_4H_9)$ Salt of Bisphenol A | 0.71 | 79,640 |
| 27 | 1:2 $(C_6H_5)_3P^{\oplus}(CH_3)$ Salt of Bisphenol A | 0.65 | 70,740 |
| 28 | 1:1 $(C_6H_5)_3P^{\oplus}(C_4H_9)$ Salt of Tetrabromo-bisphenol A | 0.65 | 71,050 |
| 29 | " | 1.68 | 142,210 |
| 30 | " | 1.70 | 121,930 |
| 31 | 1:1 $(C_6H_5)_3P^{\oplus}(C_4H_9)$ Salt of Tetrachloro-bisphenol A | 1.69 | 118.810 |

The data in Table V suggests that to produce resins having ultra-high molecular weights, relatively greater catalyst loadings must be employed than used to produce those of relatively lower molecular weights.

Example 32

To a reaction vessel equipped with means for stirring, heating and temperature indication was charged at 20°C under nitrogen purge with 67.0 parts of bisphenol A, 133.0 parts of DGEBA having an epoxy equivalent weight (EEW) of 187 and 0.484 part of a 1:1 n-butyltriphenyl phosphonium salt of 2,2',6,6'-tetrabromobisphenol A. This stirred reaction mixture was warmed at a rate of 3°C per minute to about 150°C. External heating was discontinued at 150°C, but the exotherm of the reaction heated the mixture to a peak temperature of about 222°C. The reaction mixture was permitted to cool to 160°C and maintained at that temperature for 30 minutes.

The observed epoxy content of the resin product determined by conventional wet analysis technique was 2.36 percent, almost as great as the theoretical epoxy content of a linear advanced epoxy resin 2.39 percent. A substantially linear epoxy resin of excellent color was provided.

Example 33

In a manner similar to that described in Example 36 as reaction mixture of 0.396 part of 1:2 n-butyltriphenyl phosphonium salt of bisphenol A, 64.0 parts of bisphenol A and 136.0 parts of DGEBA was warmed to 150°C and then allowed to heat in accordance with the reaction exotherm. The reaction mixture was then permitted to cool from its peak temperature of 244°C to 160°C, where the temperature was maintained for 30 minutes.

The observed epoxy content of the resin product determined by conventional wet analysis technique was 4.64 percent; almost identical to the theoretical epoxy content of 4.65 percent. A substantially linear epoxy resin of excellent color was provided.

Example 34

To a reaction vessel equipped with means for stirring and controlling temperature was charged at 20°C under a nitrogen purge a mixture of 87 parts of bisphenol A and 200 parts of a diglycidyl ether of bisphenol A having an EEW of 187.7. This stirred reaction mixture was warmed to a temperature of 100°C over a period of 30 minutes and then 0.428 part of a 1:2 n-butyltriphenyl phosphonium salt of bisphenol A was introduced. The temperature of the mixture was controlled during the reaction so that

it did not exceed 200°C. After the rate of exothermic reaction decreased, the mixture was heated at 190°C for two hours.

The observed epoxy content of the resin product determined by conventional wet analysis technique was 4.34 percent; close to the theoretical epoxy content of 4.65 percent. A substantially linear epoxy resin of excellent color was provided. This resin differed from the resin prepared in Example 37 in that molded articles produced from the former had somewhat better heat distortion properties than those produced from the latter resin.

### Example 35

To a reaction vessel equipped with means for stirring and temperature indication was charged at 20°C under nitrogen purge 10.3 grams (0.05 mole) of 4-t-butylphenyl glycidyl ether, 3.6 grams (0.05 mole) of acrylic acid and 0.014 gram of the 1:2 n-butyltriphenyl phosphonium salt of bisphenol A. The reaction mixture was stirred at a temperature of 115°C for a period of five hours. A sample of the reaction mixture was titrated with base at the end of the reaction period and less than 1 percent of the acrylic acid added was determined to be unreacted. Infrared spectroscopy and other conventional methods of analysis were utilized to identify the product as corresponding to the formula

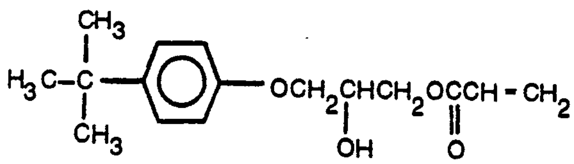

In contrast, only a 28 percent yield of product was obtained in a similar experiment conducted without the catalyst. This example demonstrates the efficacy of the tetrahydrocarbyl phosphonium phenoxide salt in promoting the reaction of a carboxylic acid with an epoxide.

### Example 36

To a reaction vessel equipped with means for stirring and temperature indication was charged at 20°C under nitrogen purge 9.4 grams (0.1 mole) of phenol, 4.84 grams (0.11 mole) of ethylene oxide and 0.014 gram of the 1:2 n-butyltriphenyl phosphonium salt of bisphenol A. The reaction mixture was stirred at a temperature of 150°C for a period of three hours. The reaction mixture was first cooled and then analyzed by conventional methods of analysis. The product was identified as 93.8 percent ethylene glycol phenyl ether and 6.0 percent diethylene glycol phenyl ether. The conversion of the phenol to the above-identified product was 99.7 percent.

### Example 37

To a reaction vessel equipped with means for stirring and temperature indication was charged at 20°C 423.9 grams of the diglycidyl ether of bisphenol A (DGEBA) having an epoxy equivalent weight of 188.73 and 136.7 grams of bisphenol A. The reaction mixture was heated to 70°C and then 0.57 gram of 1:1 n-butyltriphenyl phosphonium salt of 2,2',6,6'-tetrabromobisphenol A was introduced with stirring. The mixture was rapidly heated to 90°C and then more slowly over a period of 30 minutes was heated to 150°C. The reaction mixture was maintained at 150°C for 1.5 hours and then allowed to cool. Another 143.21 grams of DGEBA was added to the reaction mixture at a temperature of 120°C. After 10 minutes, a small sample of the reaction mixture was analyzed by conventional methods to determine an epoxide content of 11.08 percent and an epoxy equivalent weight of 388.01. Thus, the epoxy resin had been partially advanced.

The partially advanced epoxy resin product was purged with air and then combined with 0.19 gram hydroquinone (a vinyl polymerization inhibitor), 155.59 grams methacrylic acid and 1.1 grams tri(dimethyl aminomethyl) phenol (a curing accelerator) at 115°C. After 5.5 hours, a sample of the vinyl ester resin was taken and 850 grams of styrene was introduced to the remaining vinyl ester resin to reduce the viscosity of the product mixture. Analysis of the sample of vinyl ester resin product by conventional methods indicated an acid content of 0.97 percent and an epoxide content of 0.83 percent.

The styrene/vinyl ester resin mixture was cured at a temperature of about 75°C in the presence of cobalt naphthenate and methyl ethyl ketone peroxide in the conventional manner. The cured vinyl ester resin-styrene copolymer possessed the physical properties tabulated in Table VI.

TABLE VI

| ASTM Test # | Property Tested | Test Result |
|---|---|---|
| D—638—68 | Yield Tensile Strength | 12,278 psi (84654 KPa) |
| D—638—68 | Yield Elongation | 5.52% |
| D—790—66 Method | Flexural Strength | 12,193 psi (84068 KPa) |
| D—790—66 Method | Flexural Modulus of Elasticity | 554,000 psi (3819.69 MPa) |
| D—2583—67 | Barcol Hardness | 26.2 |

It is apparent from the data tabulated in Table VI that the vinyl ester resins produced from epoxy resins advanced with the catalysts of this invention possess useful properties.

Example 38

A methanol solution of sodium hydroxide (4.0 grams, 0.1 mole) at 20°C was added slowly to a stirred reaction mixture of ethyltriphenyl phosphonium bromide (37.13 grams, 0.1 mole) in 37.0 grams of methanol cooled to a reaction temperature of 10°C. The rate of sodium hydroxide addition was controlled, so that the temperature of the reaction mixture did not exceed 10°C. After addition of the sodium hydroxide was complete, the reaction mixture was stirred for one hour and then filtered through a sintered glass funnel. The recovered solid, sodium bromide, was washed with cold, anhydrous methanol and dried to yield 10.0 grams (97.17 percent yield).

A methanol solution of bisphenol A (11.4 grams, 0.05 mole) at 20°C was added slowly to the stirred filtrate containing ethyltriphenyl phosphonium hydroxide at 10°C. After stirring at 10°C for one hour, the excess methanol solvent was removed by vacuum distillation technique (50°C, 0.1 mm) to yield a light-yellow solid; the reaction mixture yielded 40.1 grams (97.0 percent) of product. Conventional methods of analysis were used to identify the product as an ethyltriphenyl phosphonium salt of bisphenol A complexed with an ethyltriphenyl phosphonium hydroxide.

This solid product was treated by stirring it in acetone at 25°C for ten minutes. The acetone was filtered to recover 28.0 grams of a white solid product, which is identified as the uncomplexed ethyltriphenyl phosphonium salt of bisphenol A.

Example 39

A methanol solution of sodium hydroxide (4.0 grams, 0.1 mole) at 20°C was added slowly to a stirred reaction mixture of ethyltriphenyl phosphonium bromide (37.13 grams, 0.1 mole) in 37.0 grams of methanol cooled to a reaction temperature of 10°C. The rate of sodium hydroxide addition was controlled, so that the temperature of the reaction mixture does not exceed 10°C. After addition of the sodium hydroxide was complete, the reaction mixture was stirred for one hour and then filtered through a medium sintered glass funnel. The recovered solid, sodium bromide, was washed with cold, anhydrous methanol and dried to yield 10.0 grams (97.17 percent yield).

A methanol solution of bisphenol S (12.5 grams, 0.05 mole) at 20°C was added slowly to the stirred filtrate containing ethyltriphenyl phosphonium hydroxide at 10°C. After stirring at 10°C for one hour, the excess methanol solvent was removed by vacuum distillation (50°C, 0.1 mm) to yield a light-yellow solid, the reaction mixture yielded 41.21 grams (97.0 percent) of product. Conventional methods of analysis were used to identify the product as an ethyltriphenyl phosphonium salt of bisphenol S complexed with an ethyltriphenyl phosphonium hydroxide.

Example 40

To a reaction vessel containing 1000 grams of DGEBA was charged with stirring 1.0 gram of the 1:2 n-butyl triphenyl phosphonium salt of bisphenol A prepared in Example 2. The stirred precatalyzed resin was maintained at a temperature of 50°C for six weeks, during which time the viscosity in centipoise and the percent epoxide were measured at two-week intervals. The measured parameters are tabulated in Table VII.

At the end of the six-week period, a sufficient quantity of bisphenol A was added to the precatalyzed resin, so that at reactive conditions the resins would be predicted by theory to produce one having an epoxy content of 2.10 percent. The resulting mixture was heated at 160°C for two hours. The observed epoxy content of the resin product determined by conventional wet analysis was 2.12 percent, virtually the same as the theoretical epoxy content of 2.10 percent.

TABLE VII

| Time (weeks) | Viscosity (centipoise) | Percent Epoxide |
|---|---|---|
| 0 | 10,372 | 23.82 |
| 2 | 10,566 | 23,78 |
| 4 | 10,600 | 23.80 |
| 6 | 10,622 | 23.75 |

**Claims**

1. A compound represented by the structural formula:

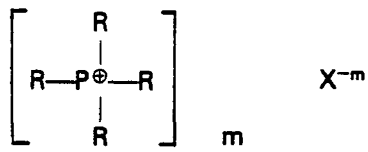

wherein each R independently is a hydrocarbyl or inertly substituted hydrocarbyl radical, X is an anion and m is the valence of the anion X, characterized in that X is a phenoxide anion, the anion being a conjugate base of a polyhydric phenol bearing from 2 to 6 nuclear hydroxyl groups and having from 6 to 30 carbon atoms.

2. The compound of Claim 1 complexed with one or more moles of the polyhydric phenol $H_mX$ per mole of the tetrahydrocarbyl phosphonium phenoxide salt.

3. The compound of Claim 1 complexed with one or more moles of the compound.

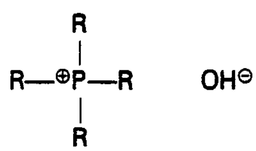

per mole of tetrahydrocarbyl phosphonium salt wherein R is defined in claim 1.

4. The compound of any of Claims 1, 2 or 3 characterized in that the anion X is derived from phenolphthalein.

5. The compound of any of Claims 1, 2 or 3 characterized in that the anion X is derived from a polyhydric phenol corresponding to the formula:

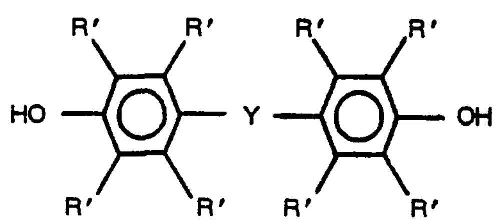

wherein each R' independently is hydrogen, halogen, hydrocarbyl, inertly substituted hydrocarbyl or hydrocarbyloxy group; Y is a single covalent bond, —O—, —S—,

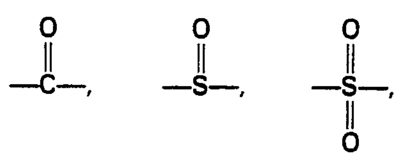

or lower alkylene or alkylidene of from 1 to 6 carbon atoms each.

6. A precatalyzed epoxy resin comprising an epoxy resin bearing an average of more than one vicinal epoxy group per molecule and a catalytic amount of a compound for promoting the reaction between vicinal epoxides and carboxylic acids or anhydrides or aromatic compounds bearing

one or more nuclear hydroxyl groups characterized in that the compound is any one of the compounds of Claims 1 to 5.

7. A precatalyzed polyhydric phenol comprising a polyhydric phenol and a catalytic amount of a compound for promoting the reaction between vicinal epoxides and aromatic compounds bearing one or more nuclear hydroxyl groups characterized in that the compound is any one of the compounds of Claims 1 to 5.

8. A process for reacting a vicinal epoxide containing compound with a phenol, a carboxylic acid or a carboxylic anhydride in the presence of a catalyst characterized in that the catalyst is any one of the compounds of Claims 1 to 5.

**Patentansprüche**

1. Verbindung der Strukturformel

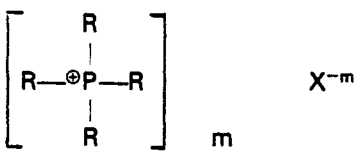

in der jedes R unabhängig ein Kohlenwasserstoff- oder ein innert substituierter Kohlenwasserstoffrest ist, X ein Anion ist und m die Wertigkeit des Anions X angibt, dadurch gekennzeichnet, daß X ein Phenoxidanion ist und das Anion eine konjugierte Base eines mehrwertigen Phenols, das 2 bis 6 an den Kern gebundene Hydroxylgruppen trägt und 6 bis 30 Kohlenstoffatome enthält, ist.

2. Verbindung nach Anspruch 1, dadurch gekennzeichnet, daß sie mit einem oder mehreren Molen des mehrwertigen Phenols $H_mX$ pro Mol des Tetrahydrocarbylphosphoniumphenoxidsalzes komplexiert ist.

3. Verbindung nach Anspruch 1, dadurch gekennzeichnet, daß sie mit einem oder mehreren Molen der Verbindung

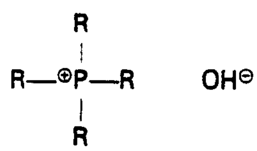

pro Mol des Tetrahydrocarbylphosphoniumsalzes komplexiert ist, wobei R die gleiche Bedeutung wie in Anspruch 1 hat.

4. Verbindung nach einem der Ansprüche 1, 2 oder 3, dadurch gekennzeichnet, daß das Anion X sich von Phenolphthalein ableitet.

5. Verbindung nach einem der Ansprüche 1, 2 oder 3, dadurch gekennzeichnet, daß das Anion X sich von einem mehrwertigen Phenol der Formel

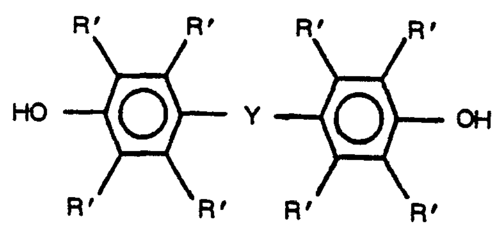

ablietet, wobei jedes R' unabhängig eine Wasserstoff-, Halogen-, Kohlenwasserstoff-, inert substituierte Kohlenwasserstoff- oder eine Hydrocarbyloxygruppe ist; Y eine einzige kovalente Bindung, —O—, —S—,

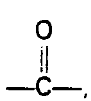, 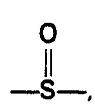, 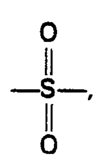,

oder eine niedrige Alkylen- oder Alkylidengruppe mit jeweils 1 bis 6 Kohlenstoffatomen ist.

6. Vorkatalysiertes Epoxyharz enthaltend ein Epoxyharz mit im Durchschnitt mehr als einer vicinalen Epoxygruppe pro Molekül und eine katalytische Menge einer Verbindung, die die Umsetzung

zwischen den vicinalen Epoxiden und Carbonsäuren oder Anhydriden oder aromatischen Verbindungen mit einer oder mehreren an den Kern gebundenen Hydroxylgruppen fördert, dadurch gekennzeichnet, daß diese Verbindung eine der Verbindungen gemäß einem der Ansprüche 1 bis 5 ist.

7. Vorkatalysiertes mehrwertiges Phenol enthaltend ein mehrwertiges Phenol und eine katalytische Menge einer Verbindung, die die Umsetzung zwischen vicinalen Epoxiden und aromatischen Verbindungen mit einer oder mehreren an den Kern gebundenen Hydroxylgruppen fördert, dadurch gekennzeichnet, daß diese Verbindung eine der Verbindungen nach einem der Ansprüche 1 bis 5 ist.

8. Verfahren zum Umsetzen einer ein vicinales Epoxid enthaltenden Verbindung mit einem Phenol, einer Carbonsäure oder einem Carbonsäureanhydrid in Gegenwart eines Katalysators, dadurch gekennzeichnet, daß der Katalysator eine der Verbindungen nach einem der Ansprüche 1 bis 5 ist.

**Revendications**

1. Composé représenté par la formule structurelle:

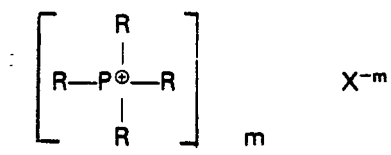

dans laquelle chaque R est indépendamment un radical hydrocarbyle ou hydrocarbyle substitué d'une façon inactive, X est un anion, et m est la valency de l'anion X, caractérisé par le fait que X est un anion phénoxyde, l'anion étant une base conjuguée d'un phénol polyhydrique comportant 2 à 6 groupes hydroxyles nucléaires et ayant de 6 à 30 atomes de carbone.

2. Composé selon la revendication 1, complexé avec une ou plusieurs mole(s) du phénol polyhydrique $H_mX$ par mole du sel tétrahydrocarbyl-phosphonium-phénoxyde.

3. Composé selon la revendication 1, complexé avec une ou plusieurs mole(s) du composé:

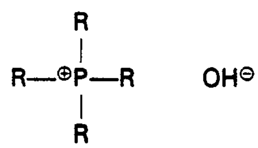

par mole du sel tétrahydrocarbyl-phosphonium dans laquelle R est tel que défini dans la revendication 1.

4. Composé selon l'une quelconque des revendications 1, 2 et 3, caractérisé par le fait que l'anion X provient de la phénolphtaléine.

5. Composé selon l'une quelconque des revendications, 1, 2 et 3, caractérisé par le fait que l'anion X provient d'un phénol polyhydrique correspondant à la formule:

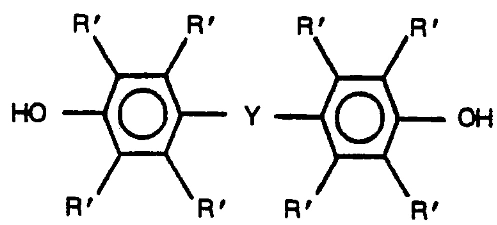

dans laquelle chaque R' est indépendamment l'hydrogène, un halogène, un groupe hydrocarbyle, hydrocarbyle substitué d'une façon inactive, ou hydrocarbyloxy; Y est une liaison simple covalente, —O—, —S—,

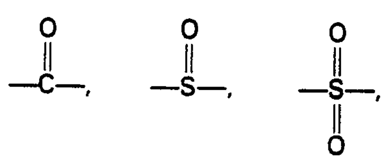

ou un groupe alkylène ou alkylidène, inférieur, ayant chacun 1 à 6 atomes de carbone.

6. Résine époxy précatalysée comprenant une résine époxy qui comporte une moyenne de plus d'un groupe époxy vicinal par molécule et une quantité catalytique d'un composé pour amorcer la réaction entre les époxydes vicinaux et des acides ou des anhydrides carboxyliques, ou des composés

aromatiques comportant un ou plusieurs groupe(s) hydroxyle nucléaire(s), caractérisée par le fait le composé est l'un quelconque des composés des revendications 1 à 5.

7. Phénol polyhydrique précatalysé comprenant un phénol polyhydrique et une quantité catalytique d'un composé pour amorcer la réaction entre les époxydes vicinaux et des composés aromatiques comportant un ou plusieurs groupe(s) hydroxyle nucléaire(s), caractérisé par le fait que le composé est l'un quelconque des composés des revendications 1 à 5.

8. Procédé pour faire réagir un composé renfermant l'époxyde vicinal avec un phénol, un acide carboxylique ou un anhydride carboxylique en présence d'un catalyseur, caractérisé par le fait que le catalyseur est l'un quelconque des composés des revendications 1 à 5.